# EUROPEAN PATENT APPLICATION

(11) **EP 1 987 712 A1**
(43) Date of publication of application: **05.11.2008**
(21) Application number: 08103510.7
(22) Date of filing: 11.04.2008
(51) Int. Cl.: A01D 34/52, A01D 41/14

(54) **Horizontal rotary cutting system and method**

(30) Priority: 03.05.2007 US 800056
(71) Applicant: Kondex Corporation, Lomira, Wisconsin 53048-0937 (US)
(72) Inventor: Stoffel, Neal J., Campbellsport, WI 53010 (US)
(74) Representative: Seiffert, Klaus

(57) **Abstract**

The present invention is directed to a horizontal rotary cutting system and a method for using such system to cut plant material, such as crops and tall grasses. The axis (17) of rotary motion of the cutting blade (15,16) is essentially horizontal, i.e., or parallel to the ground and is essentially perpendicular to the longitudinal axis stalk of the plant material (11) to be cut. The cutting blade has an elongated cutting surface (13,14) that rotates perpendicularly toward, and passes through and cuts the plant material stalks. A cutting diameter of about two inches or less is used to achieve lower horsepower requirements, lower friction losses, and lower vibration of the system when compared to prior systems. High speeds of rotation of the cutting blade permit and facilitate the use of high ground speeds of the cutting system.

## Description

### FIELD OF INVENTION

The present invention is directed to a rotary mower system and apparatus as well as to an impact cutting method for cutting plant material, such as crops and grasses. In the invention, the axis of rotary motion of the rotary cutting blades is essentially horizontal, i.e., or parallel to the ground and is essentially perpendicular to the stalk of the plant material to be cut. The system has relatively low horsepower requirements because a cutting diameter of about two inches or less is used.

### BACKGROUND OF THE INVENTION

There are several predominant cutting systems and methods currently used to cut plant material, such as crops.

One of such prior art cutting systems comprises direct harvesting performed by a combine. During operation, standing plant material, such as a crop, is pushed by a reel against a cutter bar and then onto a platform, where the cut crop is conveyed toward the center of the platform from either side by the platform auger and then subjected to further harvesting operations. Cutting of the crop is performed by a sickle-type cutting system and method in which a reciprocating knife and stationary countershear (rock guards) cut the crop material between the knives and guards in a slicing action. Sickle-type cutting systems and methods are old and well known in the art and remain a predominant cutting technique for combine headers. A disadvantage of sickle-type cutting systems is that the system reciprocates at relatively low speeds, thereby requiring the cutting system to operate at low ground speeds. Such low speeds are dictated by the mass of the sickle and the mechanical limits of the equipment, thereby creating a bottleneck. Although attempts to reduce this bottleneck are the subject of considerable development work by equipment manufacturers, a ceiling apparently has been reached because improvements have become incrementally smaller and more difficult to realize, apparently due to limitations inherent in the materials and physics of the process.

Another prior art system and method for crop cutting is a type of impact cutting referred to as rotary cutting, in which rotary mowers rotate a circular blade about a vertical axis. As contrasted to the sickle-type cutting system, this system is a relatively recent development and is used predominantly for hay and forage gathering equipment. A rotary mower system having a plurality of rotatable cutter units on a transversely extended cutter bar is illustrated in U.S. Patent No. 3,940,910. This system rotates the cutting members about a vertical axis. These cutting systems have the advantage of very high rotational speeds and thus high ground speeds. On the other hand, rotary cutting systems require great amounts of horsepower to cause a high speed of rotation of all of the gears and components of the system. Another disadvantage is that rotary cutting systems are not useful to cut plant material, such as crops, on a combine header because blade impact upon striking causes the grain to become separated from the crop before the grain reaches the combine. Thus the amount of waste generated precludes the practicality of such impact mowing process.

Yet another prior art system for crop cutting is a type of impact cutting known as flail cutting, in which flail mowers rotate about a horizontal transverse axis. Hinging of the flails provides flexibility, thereby permitting the flails to swing back and forth to minimize damage caused by rocks. In contrast to flail cutting systems, the cutting blade of the present invention is rigidly affixed to the cutting system apparatus in a manner that holds or fixes the blade in one position and thus does not permit or attain a swinging motion. Power requirement for flail mowers is considerably higher than for sickle-type mowers of the same width because impact cutting requires greater power than cutting with a countershear and because the rotor causes air pumping.

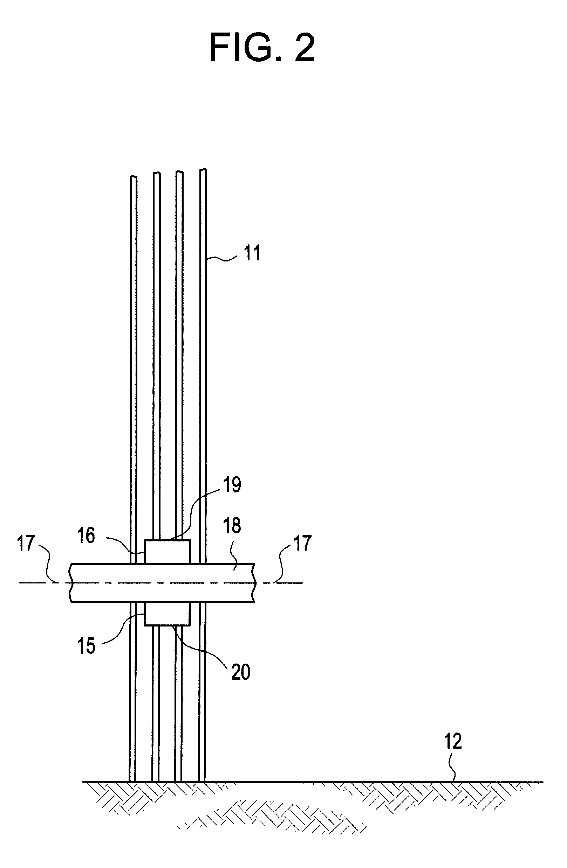

Another prior art cutting system is illustrated by a grain combine that was modified to produce single-pass, whole-plant corn harvesting with two crop streams, grain and stover. A description of such modified grain combine is contained in Paper Number 061015, authored by Shinners et al. and entitled "Single-Pass, Split-Stream of Corn Grain and Stover: Characteristic Performance of Three Harvester Configurations." Such paper was presented at the July 9-12, 2006 Annual International Meeting of the American Society of Agricultural and Biological Engineers. The paper disclosed the modification of a Slavutich model KMM-6 ear-snapper corn head to operate in a John Deere combine. The modification was illustrated in Figure 2 of the paper. The corn head had a full-width knife rotor located below and behind the snapper rolls. The rotor head had two knives and a 172 mm (about seven inches) cutting diameter and rotated at about 2,270 revolutions per minute (rpm). A rotary cutting system of this type requires a large amount of horsepower (hp) to operate - on the order of 20 hp. In contrast, the rotary impact system of the present invention uses cutting diameter of no more than about two inches. As a consequence, significantly lower horsepower is required - on the order of about 5 hp. In addition, the cutting blade of the present invention rotates at a speed of about 3,000 to about 5,000 rpm, thereby permitting the attainment of higher ground speeds than those of the modified grain combine.

The horizontal rotary cutting techniques of the present invention can be generally described as impact cutting, except that the axis of the rotary motion is horizontal, i.e., parallel to the ground, and is essentially perpendicular to the plant material stalks.

As will be discussed in greater detail below, the present invention is quite different in structure, function, and result than the prior art cutting systems and methods described above and addresses and solves or reduces many of the above-mentioned problems of prior art cutting systems and methods in a simple, efficient manner. The significant advantages obtained through use of the present invention are set forth in greater detail in a later portion of this patent application. However, such advantages involve very low friction losses and very low horsepower requirements when contrasted to the prior art systems and methods described above. In addition, the amount of potentially harmful vibration during an operation of the cutting system of the present invention is virtually eliminated. Moreover, the high-speed capability of the cutting system and method of the invention, due to the high rotational speeds of the cutting blades during cutting, achieves appreciably higher ground speeds. The cost of the present cutting system is believed to be equal to or lower than prior art cutting systems.

### SUMMARY OF THE INVENTION

The present invention pertains to a rotary impact cutting system for cutting in-ground plant material stalks having a longitudinal axis substantially perpendicular to the ground. Such system broadly comprises a drive shaft, adapted to be connected to a power source for causing rotation thereof, for causing rotation of a rotary cutting element which is rigidly affixed to and movable with and rotatable around the drive shaft. The power requirements of the power source are relatively low, on the order from about 5 to about 30 hp, depending upon the width of the cutting system. The cutting element contains at least one cutting blade having an elongated cutting surface having a cutting diameter of about two inches or less. The cutting element is located essentially parallel to, rigidly affixed to, and rotatable about the longitudinal axis of the drive shaft. The longitudinal axis of the drive shaft is oriented substantially horizontal to the ground and substantially perpendicular to said plant material stalks, thereby rendering the cutting blade capable of cutting the plant stalks having the elongated cutting blade surface being caused to rotate perpendicularly toward and through the plant stalks.

The present invention is also directed to a method for rotary impact cutting in-ground stalks of plant material having a longitudinal axis substantially perpendicular to the ground. The method comprises rotating at least one cutting blade having an elongated cutting surface having a cutting diameter of about two inches or less and rigidly affixed to a rotating cutting element, which in turn is affixed to and rotates about a drive shaft having a longitudinal axis substantially horizontal to the ground and substantially perpendicular to the plant stalks; passing the elongated cutting surface of the rotating cutting blade, which is essentially parallel to the longitudinal axis of the drive shaft, perpendicularly toward and through the longitudinal axis of the plant stalks; and cutting the plant stalks.

According to one embodiment, the cutting blade surface contains a flat cutting edge. According to another embodiment, the cutting blade surface contains a serrated cutting edge.

In case of the latter, the serrated cutting edge may further contain V-grooves.

According to a further embodiment, which is independent of the aforementioned embodiments but may still be combined with those aforementioned embodiments, the elongated cutting surface is in the surface hardened condition and has a surface hardness from about 65 to about 85 on the Rockwell C comparative scale.

In a typical embodiment of the present invention, the cutting diameter of the cutting system is from 1 1/4 inches to about 2 inches (1 inch = 2,54 cm).

This also holds for a corresponding cutting element as for instance defined in claim 13, wherein the cutting diameter of the said rotary cutting element could be from about 1 1/4 inches to about 2 inches.

Regarding the method for rotary impact cutting according to claim 16, a further improved embodiment may employ a series of connected rotating cutting elements.

With that embodiment, it would further be possible to have said series of connected rotating cutting elements flexibly connected, whereby contact with the ground and debris would be minimized.

### BRIEF DESCRIPTION OF THE DRAWINGS

Figure 1 is a conceptual drawing generally depicting a side view of the system of the invention.
Figure 2 is a conceptual drawing generally depicting a front view of the system of the invention.
Figure 3 is a perspective view of a cutting blade suitable for use in the cutting system of the invention.
Figure 4 is a top view of an embodiment that further illustrates the cutting system of the invention.
Figure 5 is a side view of the embodiment described in Figure 4.
Figure 6 depicts the use of a series of the embodiment described in Figures 4 and 5.
Figure 7 is a top view of an embodiment of a cutting system of the invention wherein separate cutting assemblies are joined together in a flexible manner.
Figure 8 is a side view of the cutting system depicted in Figure 7.
Figure 9 is a front view illustrating the use of two oppositely rotating cutting blades having a common cutting area.

### DETAILED DESCRIPTION OF THE INVENTION

The plant cutting system and method of the present invention is that of the impact type. Such system may be referred to as a horizontal rotary cutting system because the axis of rotation for the rotating cutting blade(s) is essentially horizontal with respect to the ground during the plant cutting process. The rotary cutting blade(s) are accordingly oriented essentially perpendicular to the ground and essentially parallel to the plant stalks as the blades of the rotating cutting elements move through and cut the plant stalks during the cutting operation. The rotary cutting blades have an elongated cutting surface which is essentially parallel to the longitudinal axis of the drive shaft and suitable for cutting into plant stalks as the system moves toward and then through the stalks to achieve cutting. The cutting blade has a cutting diameter of no more than about 2 inches, with a preferred cutting diameter of from about 1¼ inches to about 2 inches. A range of cutting diameters useful in the practice of the present invention is from about ¼ inch to about 2 inches. If the cutting diameter of the system is any larger than about two inches, its use as a cutter for combining grain and cutting hay would be impaired because the cutter would chop up too much of the plant stalks to be practical. This system is useful to perform a variety of processes and may easily be retrofitted to and is thus usable with many existing cutting systems. The system and method of the present invention possesses a number of important and significant advantages when contrasted with prior art systems and methods and solves or greatly reduces a number of problems encountered in prior art systems and methods.

The present invention may be typically used in combination with combine grain headers, flex headers, and draper headers to cut and harvest crops. The invention may also be typically used as hay and forage mowers and mower conditioners. General grass mowing, orchard mowing, and mowing along highways and waterways constitute other typical types of mowing applications.

As mentioned previously, the horizontal rotary cutting system and method of the present invention are believed to possess a number of significant advantages when contrasted to prior art cutting systems and methods. A number of these advantages are set forth below.

The cutting system of the invention involves a cylindrical cutting area, i.e., cutting diameter, that is quite smaller than that of the flail cutting system or the modified grain harvester mentioned earlier in the present application. Thus, the inventive cutting system can be utilized to cut only the stalks of the plant material in a sufficiently gentle manner to avoid major shatter losses that are common for other types of rotary cutting systems.

Horsepower requirements for the system of the invention are substantially lower as contrasted to the prior art systems because cutting elements having a uniquely small cutting diameter are used in the system of the invention. The above-mentioned cutting elements and cutting blades, as contrasted with the prior art, may be rotated at very high rates of speed because of the small cutting diameter of the cutting elements. Such increased speed permits and facilitates an increase in ground speed thereby addressing the need to reduce a significant bottleneck in the plant material cutting art.

Depending on the width of the cutting system being utilized, the horsepower requirements are determined to be less than one hp per foot of cutting width. This equates to approximately 1/10 of the horsepower required for sickle mowing, and 1/20 of the horsepower required for disc mowing the same width swath.

The cutting system of the present invention utilizes high blade rotations on the order of about 3,000 to about 5,000 rpm. As the rotation rate increases, higher ground speeds may be achieved.

The cutting system of the present invention utilizes cutting elements that may be conveniently mounted to conventional cutterbars using customized rock guards, bearings, and connectors, thereby rendering it possible to retrofit to virtually all other cutting systems.

The cutting elements of the present invention may be connected to each other with a flexible joint thereby permitting such elements to be used on flex-type combine headers.

The costly reciprocating drive mechanisms of prior art systems are not required for the present system of the invention, and thus vibration and the attendant problems caused in other mechanisms of such prior art systems is avoided in the inventive cutting system. Elimination of the reciprocating drive permits minimization of the width of the end dividers of the cutting system. Such minimization is desirable because wide dividers knock down more plant material, such as crop, than narrower end dividers. Thus, the amount of unusable crop generated during cutting is reduced by the present invention. Also, by eliminating the large conventional reciprocating drive, a substantial amount of weight is eliminated from the cutting system thus lessening the carrying weight. This will require less structure and less power to propel the system in the fields.

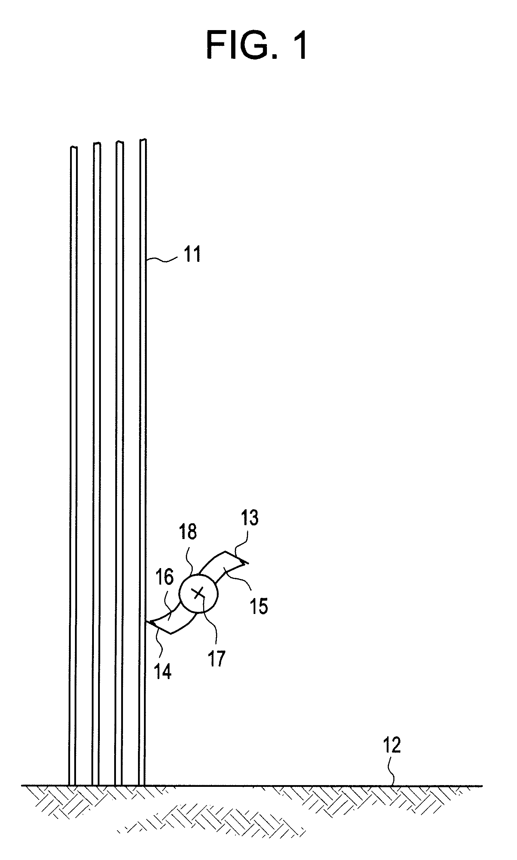

A side view of the above-described impact cutting system and method of the invention is conceptually illustrated in Figure 1. In such Figure, plant stalks 11, growing in ground 12, are cut by elongated cutting surfaces 13 and 14 of rotary cutting blades 15 and 16. Cutting blades 15 and 16 rotate rapidly - for example on the order of 3,000 rpm - and function to cut plant stalks 11 as the rotary cutting impact cutting system moves perpendicularly toward and through plant stalks 11. Cutting blades 15 and 16 are rigidly affixed to a cutting element (not shown) which rotates about longitudinal axis 17 of drive shaft 18 and cuts plant stalks 11 on a direction perpendicular to plant stalks 11. Drive shaft 18 is adapted to be connected to a conventional power source, such as a motor (not shown), to cause rotation thereof. Cutting blades 15 and 16 may be curved as depicted or may be flat. Elongated cutting surfaces 13 and 14 may have sharpened edges and may be serrated. V-shaped grooves located on cutting surfaces 13 and 14 further facilitate and further ensure efficient cutting of plant stalks 11. Cutting surfaces 13 and 14 are elongated and may be generally flat or contoured.

A front view of the above-described impact cutting system and method of the invention is also conceptually illustrated in Figure 2. As may be further evident, cutting blades 15 and 16 are connected to drive shaft 18 and caused to rotate toward and through plant stalks 11 by drive shaft 18 in a direction perpendicular to plant stalks 11. Cutting blades 15 and 16 are rigidly affixed to drive shaft 18 and are caused to move in a rotating fashion as drive shaft 18 rotates and causes elongated cutting surfaces 19 and 20 to cut and pass through plant stalks 11 as the cutting system moves in a direction essentially parallel to ground 12 and toward plant stalks 11.

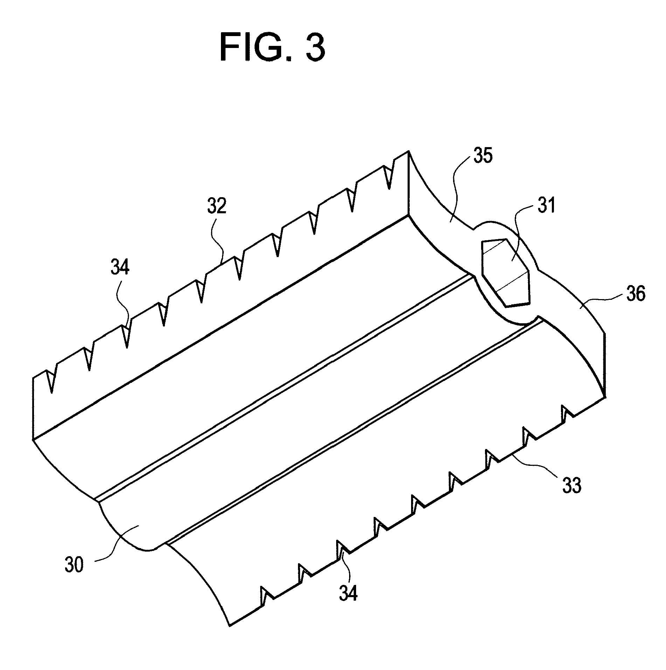

Figure 3 is a perspective view of a cutting blade embodiment suitable for use in the cutting system of the invention. Cutting blade 30 has central opening 31 in which a drive shaft (not shown) may be inserted and rigidly secured therein. Rotation of the drive shaft causes cutting blade 30 to rotate. Cutting blade 30 has generally elongated cutting surfaces 32 and 33 which are caused to rotate and move toward and through plant material to achieve cutting. Although cutting surfaces 32 and 33 are illustrated as having V-groove serrations 34 to further enhance cutting, a sharpened generally triangular cutting surface without such serrations may be used in the practice of the present invention. Other useful elongated cutting surfaces serrations include, but are not limited to, square tooth, round tooth, wavy, etc. Depending upon cutting conditions encountered in the field, i.e. moisture, crop type, crop dimensions, etc., any of the above-described cutting surface shapes may be used.

The shape of the cutting surface should be compatible with the cutting task of the cutting system. In this regard, the cutting surface is rotated perpendicularly toward and through the plant material to be cut. Thus an elongated, relatively straight cutting surface is preferred. In addition, the shape of the cutting blade between central opening 31 and elongated cutting surfaces 32 and 33 is an important operational consideration. As depicted in Figure 3, blade portions 35 and 36 are of a concave, curved configuration between cutting surfaces 32 and 33 and opening 31. A concave or S-shaped configuration that is illustrated in Figure 3 is preferred because such configuration serves to assist in plant removal from the cutting system following cutting. Assuming that cutting blade 30 rotates in a counterclockwise direction, cutting surfaces 32 and 33 will first cut the plant material and then such material will be caught in concave portions 35 and and 36 and then swept towards the gathering portion of the machine. An optional component to the cutting system of the invention is the addition of a trash knife mounted along the entire top edge of the system. The trash knife would be fixedly located very close to the rotating cutting surface of the cutting blade to prevent as-cut plant material from wrapping around the cylindrical-shaped cutting blades. It is further contemplated to enclose, or shield, at least a portion of the area below the cutting blade to minimize the occurrence of contact with rocks or other field debris.

Cutting blade 30 may be produced by forming a piece of flat steel into an S-shape, for example, with use of a progressive mechanical die and then sharpening elongated cutting surfaces 32 and 33 with a milling cutter or grinding wheel. The cutting blade may also be produced by rolling the shape into a strip of steel at the steel mill or during subsequent processing. Lastly, the blade may also be formed by milling the concave area from a piece of flat bar stock.

Cutting blade 30 may typically be manufactured from high strength steels, including 1035 to 1090 carbon steels; alloy steels, including 4140, 4150, and 4160; and tool steels, including O-1, A-2, D-2, and M-4. These steels are typically heat-treated to hardness levels of about 55 to about 65 on the Rockwell C scale. A typical heat treatment comprises quenching and tempering by following practices and parameters known in the art for such steels.

Following heat treatment, the cutting action of elongated cutting surfaces 32 and 33 may be further enhanced through use of surface hardening by boronizing, titanium nitriding, carbo-nitriding, or any of numerous other well-known surface hardening processes. Following such surface treatment, blade 30 would possess a desirable combination of properties. Cutting blade 30 would possess a hard, tough, and strong core along with very hard cutting surfaces 32 and 33 which would be capable of maintaining a sharp edge to maximize field life. Following heat treatment and surface hardening, typical core hardness would range from about 55 to about 65 on the Rockwell C scale and typical surface hardness from about 65 to about 85 on the Rockwell C comparative scale.

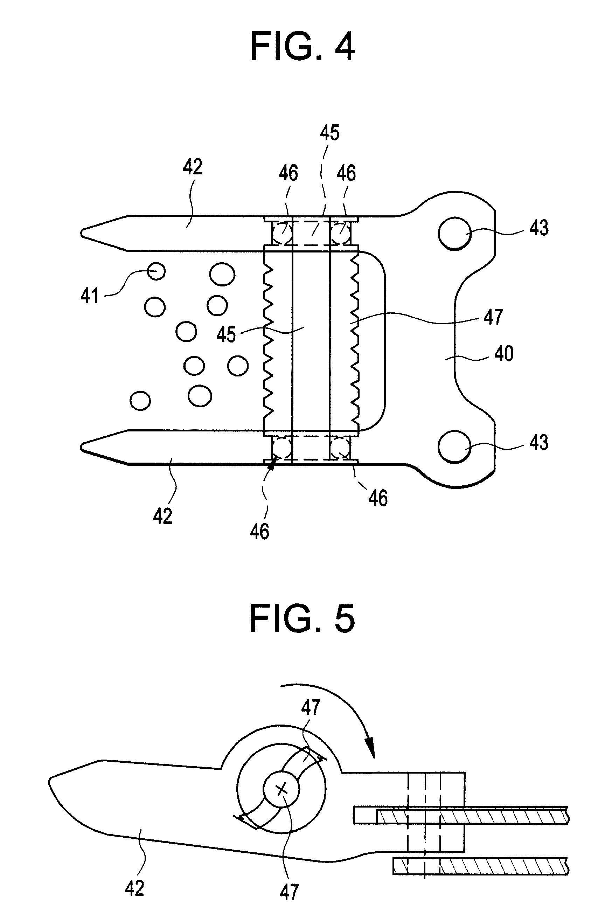

Figure 4 is a top view of an embodiment of the present invention. Plant material stalks 41 are gathered and collected for cutting by fingers 42 of cutter header 40 which moves perpendicularly toward stalks 41. Holes 43 permit the header to be attached conveniently by bolting and move with a cutting apparatus, such as a combine grain header, a flex header, a draper header, or any other type of cutting apparatus. Cutting element 45 is attached conveniently by bolting to cutting header 40 at openings 46. During operation, cutting blades 47 are caused to rotate around drive shaft 48 as header moves toward plant stalks 41 in a manner that results in elongated, serrated cutting surfaces 49 of cutting blade 47 contacting and cutting plant stalks 41. Note that elongated cutting surfaces 49 are located essentially parallel to the longitudinal axis of drive shaft 48.

Figure 5 is a side view of the embodiment of Figure 4.

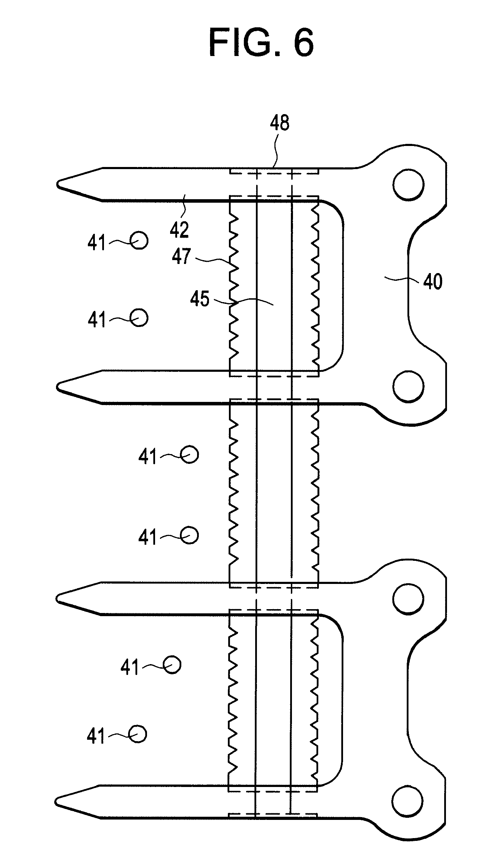

Figure 6 depicts the use of a series of the embodiment depicted in Figures 4 and 5 wherein larger amounts of crop material 41 may be cut during a single pass.

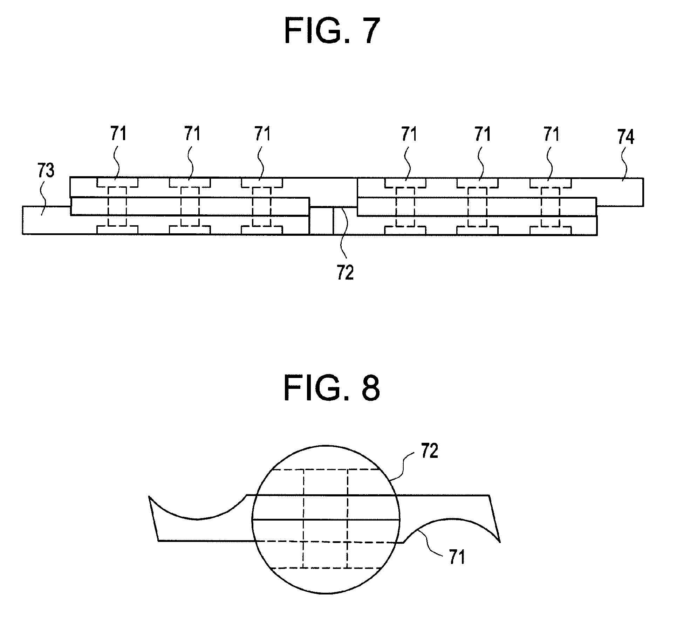

Figure 7 is a top view of an embodiment of the cutting system of the invention wherein separate cutting assemblies are joined together in a flexible manner so that the system can flex and thus more closely follow the contour of the ground during cutting operations thereby minimizing contact with the ground and debris. As may be seen, two series of three cutting elements 71 are flexibly connected together by flexible roller bearing assembly 72 so that each series of cutting elements 71 may move independently as the cutting system travels over the ground. Roller bearing assembly 72 comprises half diameter shaft 73 and adjacent half diameter shaft 74.

Figure 8 is a side view of the cutting system depicted in Figure 7. As may be observed, respective drive shafts 73 and 74 are held in place or secured within roller bearing 72 in a manner whereby drive shafts 73 and 74 may move independently, and thus the desired flexibility is present. Beveling the ends of drive shafts 73 and 74 that are contained within roller bearing 72 serves to create even more flexibility and reduces wear.

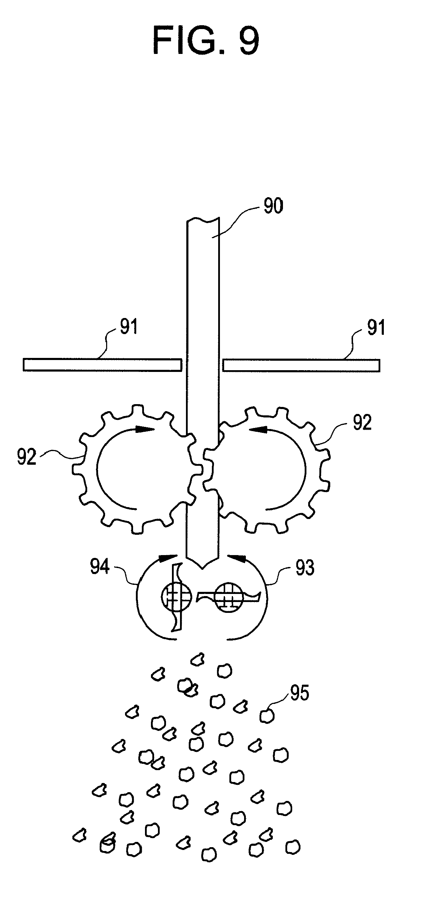

Figure 9 is a front view illustrating the use of two oppositely rotating cutting blades 93 and 94 having a common cutting area. This configuration illustrates the use of counter-rotating blades of the type useful in the present invention as a means to shred corn stalks as part of a corn picker attachment for a combine. As the combine moves forward in the field, corn stalk 90 is engaged by stalk rolls 92 and pulled downwardly for subsequent shredding by cutting blades 93 and 94. As indicated by the rotational arrows, cutting blades 93 and 94 rotate in opposite directions to produce shredded stalks 95. Cutting blades 93 and 94 are controlled and timed so as not to come in contact. Stripper plates 91 serve to strip any ears of corn from the stalk and to chute them into an ear gathering chain (not shown) to be conveyed into the combine. There are many advantages to shredding the stalk in this method, most of which are mentioned previously except this use of the invention shreds the stalk more than any previous known prior art. This is desirable since the finer the stalk is shredded, the faster and easier it is for microbes to start the decomposition process. This is essential to no-till farming practices because the planting machinery will be running directly through the field which has been combined. Any large stalks will clog up the planter and require the operator to stop and remove the clogs.

## Claims

**1.** A rotary impact cutting system for cutting in-ground plant material stalks having a longitudinal axis substantially perpendicular to the ground comprising:
(a) A drive shaft adapted to be connected to a power source for causing rotation of said drive shaft; and
(b) A rotary cutting element rigidly affixed to and movable with and rotatable around said drive shaft, said cutting element having at least one cutting blade having an elongated cutting surface and being connected to and rotatable about a longitudinal axis of said drive shaft to have a cutting diameter of about two inches or less, said longitudinal shaft axis oriented substantially horizontal to the ground and substantially perpendicular to said plant material stalks, thereby rendering said elongated cutting surface capable of cutting said stalks while being essentially parallel to said longitudinal shaft axis and caused to rotate perpendicularly toward and then cutting said plant stalks.

**3.** The cutting system of claim 2, wherein said cutting blade comprises a high strength steel member selected from the group consisting of carbon steel, alloy steel, and tool steel.

**4.** The cutting system of claim 1 further comprising attaching a series of connected cutting systems of claim 1 to a movable cutting apparatus.

**5.** The cutting system of claim 4, wherein said cutting systems are connected by a roller bearing assembly having a half diameter shaft and an adjacent half diameter shaft.

**6.** The cutting system of claim 1, wherein said power source is less than one hp per foot of cutting width.

**7.** A rotary cutting element for use in a rotary cutting system having a cutting diameter of about two inches or less comprising a least one steel heat-treated cutting blade having an elongated, surface hardened cutting surface and adapted to be connected to and rotate about a longitudinal axis of a drive shaft, said elongated cutting surface located essentially parallel to said longitudinal axis whereby said series of cutting systems moves in a flexible manner over said ground.

**8.** The cutting system of claim 1, wherein said system utilizes two cutting blade elements having cutting blades rotating in opposite directions and having a common cutting area.

**9.** The rotary cutting element of claim 7, wherein said cutting surface comprises a serrated surface.

**10.** A method for rotary impact cutting in-ground stalks of plant material having a longitudinal axis substantially perpendicular to the ground comprising rotating at least one cutting blade having an elongated cutting surface and a cutting diameter of about two inches or less and being rigidly affixed to a rotating cutting element which is affixed to and rotates with a drive shaft having a longitudinal axis essentially parallel to the elongated cutting surface, substantially horizontal to said ground, and substantially perpendicular to the plant stalks; passing said rotating cutting blade surface perpendicularly toward said plant stalks, and then passing said rotating cutting blade surface through and cutting said longitudinal axis of said plant stalks.

**11.** The method of claim 10, wherein said flexible connection comprises a roller bearing assembly having a half diameter shaft and an adjacent half diameter shaft.

**12.** The method of claim 10, wherein said cutting diameter is from about 1¼ inches to about 2 inches.

**13.** The method of claim 10, wherein said cutting element contains two cutting blades rotating in opposite directions and having a common cutting area.

**14.** The method of claim 10, wherein said cutting blade rotates at about 3,000 to about 5,000 rpm.

**15.** The method of claim 10, wherein a power source of less than one hp per foot of cutting width causes rotation of said cutting element.
